# EUROPEAN PATENT APPLICATION

(11) **EP 4 482 077 A1**
(43) Date of publication of application: **25.12.2024**
(21) Application number: 23180339.6
(22) Date of filing: 20.06.2023
(51) Int. Cl.: H04L 9/00, G06Q 10/30, G06Q 10/06, G06Q 10/08, G06Q 50/04

(54) **COMPUTER-IMPLEMENTED METHOD AND SYSTEM FOR DIGITALLY PROCESSING INDUSTRIALLY PRODUCED PRODUCTS BASED ON WASTE MATERIALS**

(71) Applicant: BASF SE, 67056 Ludwigshafen am Rhein (DE)
(72) Inventor: GRAF, Nicole, 67061 Ludwigshafen am Rhein (DE); GRUMBRECHT, Bastian, 67061 Ludwigshafen am Rhein (DE); FEYEN, Mathias, 67056 Ludwigshafen am Rhein (DE); HAAKE, Mathias, 67056 Ludwigshafen am Rhein (DE); PACK, Robert, 67061 Ludwigshafen am Rhein (DE); MAYER, Marion, 67056 Ludwigshafen am Rhein (DE); KREI, Georg Arnold, 67056 Ludwigshafen am Rhein (DE); STREGE, Stefan, 67056 Ludwigshafen am Rhein (DE); FREY, Bodo, 67056 Ludwigshafen am Rhein (DE); KLOSTERHALFEN, Steffen Thomas, Stockport SK1 3GG (GB)
(74) Representative: BASF IP Association

(57) **Abstract**

Disclosed is a computer-implemented method for controlling production of a product in a production facility using one or more input materials, in particular for the production of a chemical product, wherein at least one of the input materials is a waste-derived material which may be provided from a source location to a target location of the production facility and wherein the source location and the target location may comprise two different waste-related technical requirements for the use of waste-derived materials for the production of a product, and wherein the method comprises the following steps:
- providing a digital representation of the waste-related technical requirements for different source locations and target locations, wherein the digital representation includes the waste-related technical requirements as a rule-based model or set of rules, based on waste material categories being processed using material attributes for classifying a waste-derived material into at least one waste material category, and wherein it is distinguished between attested material attributes and associated material attributes;
- evaluating at least one rule of the set of rules or the rule-based model relating to at least one waste material category for an underlying source location and for the target location, in particular regarding an attested material attribute for the waste-derived material;
- generating control data for the production of the product, dependent on the result of the evaluation, wherein considering an associated material attribute.

## Description

### TECHNICAL FIELD

The present disclosure relates to methods and systems for digitally processing or controlling industrially produced products based at least partly on waste or waste-derived materials which may be provided across technically regulated borders, regarding waste-related technical requirements for the use of waste-derived materials for production of a product.

### TECHNICAL BACKGROUND

In many fields of industrial production, like in the field of chemical production, for environmental protection and corresponding sustainable production and consumption, a cost-effective industrial waste processing is an important factor. For instance, in the field of industrial production of chemical products based on waste-based chemical raw or input materials, such materials are often transferred, transported or shipped across waste-related technically regulated borders with different or deviating technical or technological requirements for the processing of waste materials.

### SUMMARY OF THE INVENTION

The underlying idea is to process waste transfers, or separations, legally valid across mentioned technically regulated borders based on a digital approach. Hereby such waste materials can be processed utilizing environmental impact-related data objects, wherein access to these data objects can be controlled by means of corresponding unique identifiers.

The mentioned technically regulated borders hereby may be city-, region- or country-based borders which may separate different waste processing technical requirements. Such technically regulated borders can also be production interfaces between production plants, e.g. in a "Verbund"-based industrial production system, including known production and supply-chain ecosystems like "Catena-X" or "Manufacturing-X".

According to a first aspect of the disclosed computer-implemented method for controlling production of a product in a production facility using one or more input materials, in particular for the production of a chemical product, wherein at least one of the input materials is a waste-derived material which may be provided from a source location to a target location of the production facility and wherein the source location and the target location may comprise two different waste-related technical requirements for the use of waste-derived materials for the production of a product, the method comprises the following steps in an arbitrary order:
- providing a digital representation of the waste-related technical requirements for different source locations and target locations, wherein the digital representation includes the waste-related technical requirements as a rule-based model or set of rules, based on waste material categories being processed using material attributes for classifying a waste-derived material into at least one waste material category, and wherein it is distinguished between attested material attributes and associated material attributes;
- evaluating at least one rule of the set of rules or the rule-based model relating to at least one waste material category for an underlying source location and for the target location, in particular regarding an attested material attribute for the waste-derived material;
- generating control data for the production of the product, dependent on the result of the evaluation, wherein considering an associated material attribute.

According to a second aspect of the disclosed method, an attested material attribute may relate to a material property that cannot be changed during the production of the product and wherein an associated material attribute may relate to a material property that can be changed during the production of the product.

According to another aspect of the disclosed method, the attested and the associated material properties are properties related to the environmental impact of an underlying waste-derived material.

According to a further aspect of the disclosed method, the transport or shipment of the at least one waste-derived material from a source location to the target location may be detected, wherein at least one waste-related technical requirement is different or deviating between the source location and the target location regarding at least one waste material category and wherein, based on the result of the detection, an evaluation is initiated or triggered on whether the at least one attested material attribute is compliant or non-compliant with the different waste-related technical requirement.

According to a further aspect of the disclosed method, an evaluation may be further triggered or in initiated on whether the at least one associated material attribute can be amended in order to be compliant with the different waste-related technical requirement.

According to a further aspect of the disclosed method, the digital representation of the waste-related technical requirements for different source locations and the target location may be realized as a machine learning system with the rule-based model implemented as a logical machine learning model.

According to a further aspect of the disclosed method, a waste-derived material may be assigned to at least one of the following waste material categories: "recyclable"/"recycled", "reusable"/"reused", "renewable"/"renewed", "recoverable"/"recovered, "disposable"/"disposed", "biomass-based", "virgin feedstock", "bio-based", "fossil feedstock" or "renewable energy-based".

According to a further aspect of the disclosed method, the control data generated for a waste-derived material with an associated material attribute relating to a different waste-related technical requirement may be adapted to meet the different waste-related technical requirement.

According to a further aspect of the disclosed method, the waste-derived material may be mixed or remixed with another input material or waste-derived material for production of the product.

According to a further aspect of the disclosed method, the detection of a different or deviating waste-related technical requirement may be based on data being stored in a decentral network, wherein the stored data include local and/or regional/national waste-related technical requirements for the use of waste-derived materials for production of a product.

According to a further aspect of the disclosed method, the de-centrally stored data may include geographic information about national borders and the underlying national waste-related technical requirements.

According to a further aspect of the disclosed method, attested material attributes and/or associated material attributes of a waste-derived material may be documented in a waste material-related data object.

According to a further aspect of the disclosed method, authorization to access the data object may be controlled by at least one authorization rule being associated with a unique identifier.

According to a further aspect of the disclosed method, the at least one authorization rule may be configured for reverse data tracking of the waste-derived material used for production of a product.

According to a first aspect of the disclosed computer-implemented system for controlling production of a product in a production facility according to any of the preceding method claims, using one or more input materials, in particular for the production of a chemical product, wherein at least one of the input materials is a waste-derived material which may be provided from a source location to a target location of the production facility and wherein the source location and the target location may comprise two different waste-related technical requirements for the use of waste-derived materials for the production of a product, the system comprises:
- a processing device for conducting the evaluation according to any of the preceding claims of the at least one rule or the rule-based model, based on a digital representation of the waste-related technical requirements for different source locations and the target location and based on the waste material categories using material attributes for classifying a waste-derived material into at least one waste material category, wherein distinguishing between attested material attributes and associated material attributes;
- a control device for controlling the production of the product, dependent on the result of the evaluation, wherein considering an associated material attribute.

According to a second aspect of the disclosed system, the processing device may detect a transport of the at least one waste-derived material from a source region to the target location, wherein at least one waste-related technical requirement may be different or deviating between the source location and the target location regarding at least one waste material category and wherein, based on the result of the detection, an evaluation may be initiated or triggered on whether the at least one attested material attribute is compliant or non-compliant with the different waste-related technical requirement.

According to another aspect of the disclosed system, the processing device may further trigger an evaluation on whether the at least one associated material attribute can be amended in order to be compliant with the different waste-related technical requirement.

According to a further aspect of the disclosed system, the system may comprise a virtual mixer for mixing or remixing the waste-derived material with another input material or waste-derived material for the production of the product, based on the result of the detection of a transport with at least one waste-related technical requirement differing or deviating between the source location and the target location.

According to a further aspect of the disclosed system, the processing device may detect a different or deviating waste-related technical requirement, based on data being stored in a decentral network, wherein the stored data may include local and/or regional/national waste-related technical requirements for the use of waste-derived materials for production of a product.

According to a further aspect of the disclosed system, attested material attributes and/or associated material attributes of a waste-derived material may be documented in a waste material-related data object.

The also disclosed digital waste material-related data object is set up for documenting above-described attested material attributes and/or associated material attributes of a waste-derived material.

The herein disclosed method and system, for instance, allow for controlling, processing or monitoring the industrial production of chemical products based on waste-based chemical raw, i.e. input materials for the production process, materials which may be transferred across above-mentioned technically regulated borders to a production site that uses these waste-based raw materials as input materials for industrial production of material-based products, for instance for the industrial production of chemical products.

Such different technical regulations may be such regulations differing between a source location of a waste-based raw material and a target location where such raw material shall be used for production. Hereby it may be distinguished between recycled brand-products and post-brand consumer waste materials. An exemplary relevant technical regulation is that renewable (e.g. bio-based) materials and recycled materials are not permitted to be used in a same product.

The mentioned (possible) balance space concerning above mentioned technical requirements for waste processing, particularly for the underlying recycling or re-use of waste, determines the available freedom about how waste components can be handled or mixed with each other differently. Hereby it may be distinguished between
"attested" sustainability-related properties (i.e. such properties with a certain environmental impact) which are determined/fixed in a waste-derived material or product, in particular ingredients/chemical compounds which cannot be changed at all during an industrial production process wherein, in the area of waste processing, it may be attested that an underlying waste-derived material or product is one of the different waste material categories "recyclable" or "recycled", "reused", "renewed", "renewable" or "reusable", "recoverable " or "recovered", or "disposable" or "disposed" waste-derived materials, maybe including "biomass-based" materials, "virgin feedstock" or "bio-based" (e.g. "Naphtha" or "bio-based Naphtha") and "fossil feedstock" materials or "renewable energy-based" materials, and
"associated" sustainability-related properties and/or ingredients of a waste material or product which can be changed, e.g. (re-)mixed, during an industrial production process.

The herein disclosed method and system also allow to automatically determine which "attested" material properties are relevant for the underlying waste processing and how to assign such attested material properties across mentioned technically regulated borders. In addition, the mentioned associated material properties may be adapted automatically to meet such technical requirements.

The herein disclosed method and system also allows for an event-driven approach wherein the event of materials being transported from a source location to a target location of a production facility may trigger an automized process for processing underlying waste-related material based on the material properties. This automized process tries to meet possibly changed technical requirements for waste processing, based on data objects or data sets or an underlying database of local or regional/national technical requirements for waste processing. These data objects, in addition, may include relevant geographic information about such technically regulated "borders" and may provide corresponding checkpoints, together with corresponding environmental impact factors.

Authorization to access a mentioned data object or data set may be based on one or more authorization rules which may be associated with a mentioned unique identifier The authorization rules may include data usage policies or other data processing instructions associated with data providing and/or data consuming services. Through the authorization rule(s), data access and data usage of such waste material-related attested material attributes and/or associated material attributes being documented in such a data object or data set may be permitted by data consuming services can be controlled in a secure manner.

### BRIEF DESCRIPTION OF THE DRAWINGS

- FIG. 1: shows a pyrolysis and cracker process according to the prior art;
- FIG. 2: shows a variant of the pyrolysis-based system and process depicted in FIG. 1;
- FIG. 3: shows an embodiment of the herein disclosed method by a block/flow diagram;
- FIG. 4: illustrates how a waste-related waste material passport may be implemented; and
- FIG. 5: shows a chemical production process using recycled and renewable waste material.

### EMBODIMENTS

In most industrial production technology areas, particularly in the field of chemical production, the management of waste is known to be based on different waste categories, like recyclable or recycled, reused, renewed, renewable or reusable materials. In the chemical field, these materials may also include biomass-based materials or renewable energy-based materials.

In the area of chemical recycling, the environmental impact contributors of chemical materials or substances are their hydrocarbon content, their heating value, their heteroatom content next to C and H, their H2O-content, their biomass content, their metal content, the molecular weight of their hydrocarbons, their content of composite materials (for example multilayer packages or glass fiber containing wind blades), their overall density, their material-specific density differences, their particle size, their material distribution, their degree of "Poyler" cross-liking or their coloration.

In addition, such industrial waste materials may have an impact on known "mass-balance" approaches, which allow to determine the use of chemically recycled or bio-based feedstock materials in a final product. In such mass-balance approaches, both recycled and virgin feedstock or bio-based and fossil feedstock materials may be used in the production process.

More particularly, a mass-balance approach allows to determine the mass fraction of the main component of a high-purity organic material. Therefore, a mass-balance approach is a transparent book-keeping process, like a chain-of-custody approach, that allows for tracking the net amount of sustainable materials as these materials move through a production system or a whole value chain or supply chain. The mass-balance approach thus ensures an appropriate allocation of these materials to the finished goods, based on an auditable bookkeeping.

Thereupon, such industrial waste materials have also a strong impact on carbon footprint-based environmental processing approaches and the related management of CO2 certificates.

In the chemical production arena, so-called "Chemcycling" approaches, e.g. based on a pyrolysis processes or chemical production processes processing Naphtha and bio-based Naphtha, are known.

Nowadays, production facilities and plants being used in different industrial production areas, including the underlying energy flow, the underlying logistics and the given infrastructure, are networked together intelligently in a so-called "Verbund" system. In such a system, for instance, chemical processes can run in different production plants or facilities which may be distributed in different countries or regions where the above mentioned cross-border problem is involved. In such a distributed way, the underlying chemical processes can run in a resource-efficient way with lower energy consumption and higher yields.

In the case of a chemical Verbund system, the complete value chain of such a Verbund includes, for instance, at least one steam cracker and a synthesis gas plant. The synthesis gas plant hereby is a core element of the Verbund. In this value chain, underlying chemical products may be further processed into a multitude of commercial products through further production process steps. Hereby it is aimed that nothing is wasted in the entire production process, what can be achieved in that any by-products of one facility may serve another facility as a valuable input material.

Known "Verbund production systems" also may comprise efficient value chains that extend from basic chemicals to high-value-added products, such as coatings or crop protection agents. Also in this scenario, the by-products of one plant can be used as the starting materials of another. In such a Verbund system, the underlying chemical processes consume less energy, produce higher product yields and conserve resources. In that manner, raw materials and energy can be saved, emissions minimized, logistics costs cut and production-related synergies exploited.

A production "Verbund" (or network) thus ensures competitive supply of key products to all segments with value chains rooted in the Verbund. Hereby it is distinguished between a "Technology Verbund" and a "Digital Verbund". A "Technology Verbund" leverages technological advantages across all segments by breadth, impact and best in class expertise, e.g., biotech sciences, catalysis, formulation platform. A "Digital Verbund" systematically uses and harvests the huge advantages and potential offered by digitalization throughout a production Verbund network, e.g. with respect to data management, scale, artificial intelligence, etc.

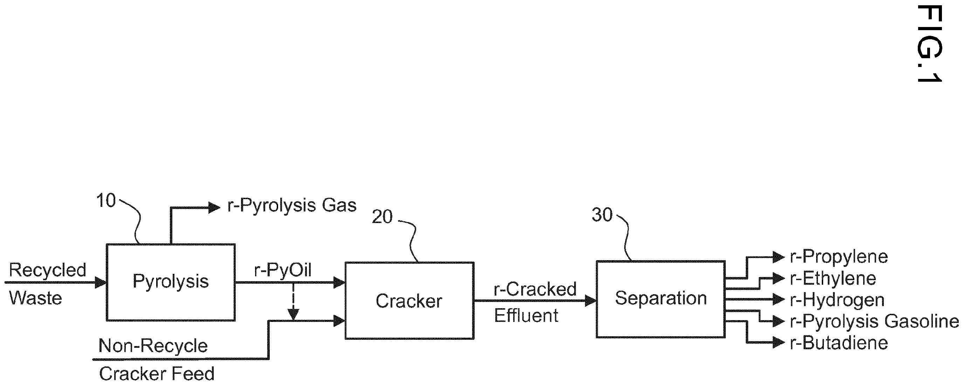

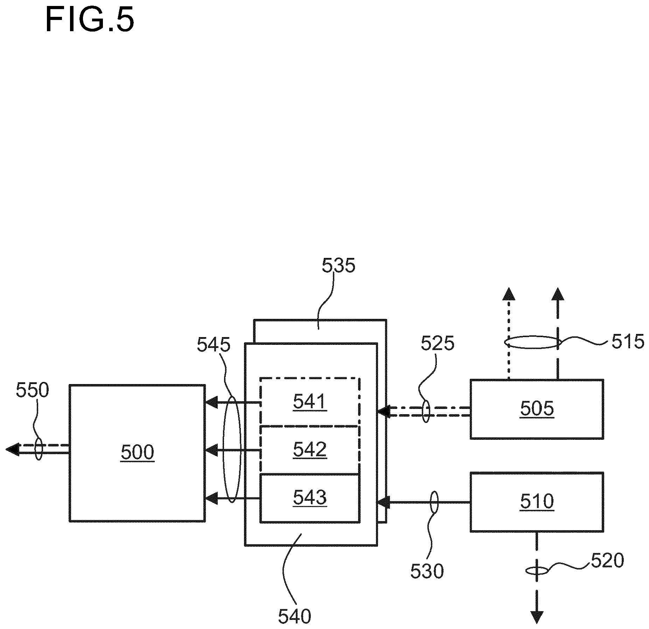

Referring now to US 2022/0402860 A1, as depicted in FIG.1, a mentioned pyrolysis and cracker process is described in more detail. In this chemical production scenario, alkanolamines are produced after a cracker 20, e.g. cracking furnace, and separated accordingly by means of a solids separator or fractionator 30. More particularly, in FIG. 1 a process for employing a recycle content pyrolysis oil composition (r-PyOil) to make one or more recycle content compositions into r-compositions is illustrated. Of course, herein shown are only one of many products that can then be manufactured. Further it has to be mentioned that the shown mixed feedstocks can be fed into the cracker simultaneously and/or mixed beforehand (see e.g. FIG. 5) and then fed in as a mixed feedstock.

The one or more recycle content compositions, i.e. the mentioned "r-composition", may be ethylene, propylene, butadiene, hydrogen, and/or pyrolysis gasoline. The recycled waste may be subjected to pyrolysis in pyrolysis unit 10 to produce a pyrolysis product or effluent comprising a recycle content pyrolysis oil composition ("r-PyOil"). The r-PyOil may be fed to a cracker 20, along with a non-recycle cracker feed, e.g., propone, ethane, and/or natural gasoline. A recycle content cracked effluent ("r-Cracked Effluent") may be produced from the cracker and then may be subjected to separation in a separation train, e.g. a solids separator or a fractionator 30.

At least a portion of the composition may be obtained from the pyrolysis of recycled waste, e.g. waste plastic or waste stream. The "r-Ethylene" may be a composition comprising ethylene obtained from cracking of a cracker feed containing r-PyOil, or ethylene having a recycle content value attributed to at least a portion of the ethylene. The "r-Propylene" may be a composition comprising propylene obtained from cracking of a cracker feed containing r-PyOil, or propylene having a recycle content value attributed to at least a portion of the propylene.

The corresponding values "recycle content value" and "r-value" mean a real unit of measure representative of a real quantity of material having its origin in recycled waste. The r-value may have its origin in any type of recycled waste processed in any type of process.

The values "pyrolysis recycle content value" and "pr-value" mean a real unit of measure representative of a real quantity of material having its origin in the pyrolysis of recycled waste. The pr-value is a specific subset/type of the above-mentioned r-value that is tied to the pyrolysis of recycled waste. Therefore, the term r-value encompasses, but does not require, a pr-value.

The particular recycle content values, i.e. r-value or pr-value, may be calculated or determined by mass or percentage or any other unit of measure and can be determined according to a standard system for tracking, allocating, and/or crediting real recycle content among various compositions. A recycle content value may be deducted from a real recycle content inventory and may be applied to a product or composition to attribute recycle content to the product or composition.

The values "pyrolysis recycle content allotment" and "pyrolysis allotment" or "pr-value" mean a real pyrolysis recycle content that is either transferred from an originating composition, e.g., compound, polymer, feedstock, product, or stream obtained from the pyrolysis of recycled waste. In the latter case, the recycle content value, or at least a portion of which, may originate from the pyrolysis of recycled waste.

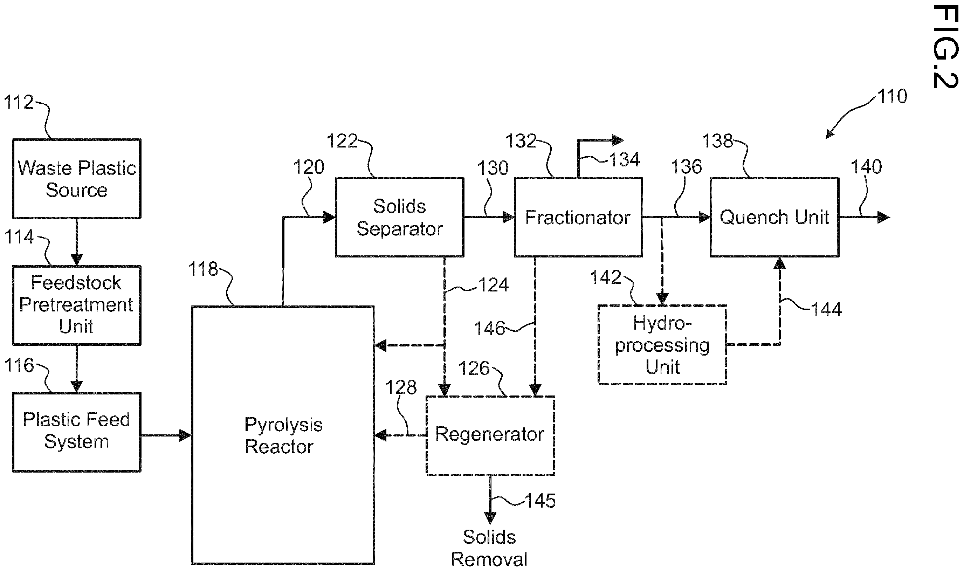

Referring again to US 2022/0402860 A1, Fig. 2 illustrates a simplified variant of the pyrolysis-based system and process illustrated in FIG. 1, in which "purification" is used instead of "hydroprocessing" wherein one or more recycled waste is at least partially converted, particularly recycled plastic waste into various useful r-products.

The exemplary pyrolysis system 110 depicted in FIG. 2 may be employed to at least partially convert one or more recycled waste, particularly recycled plastic waste, into various useful pyrolysis-derived products. The pyrolysis system 110 may include a waste plastic source 112 for supplying one or more waste plastics to the system 110. The plastic source 112 can be, for example, a hopper, storage bin, railcar, over-the-road trailer, or any other device that may hold or store waste plastics. The waste plastics supplied by the plastic source 112 may be in the form of solid particles, such as chips, flakes, or a powder. The waste plastics may include one or more post-consumer waste plastic such as, for example, high density polyethylene, low density polyethylene, polypropylene, other polyolefins, polystyrene, polyvinyl chloride (PVC), polyvinylidene chloride (PVDC), polyethylene terephthalate, polyamides, poly(methyl methacrylate), polytetrafluoroethylene, or combinations thereof. The waste plastics may also include high density polyethylene, low density polyethylene, polypropylene, or combinations thereof. the plastic waste may also comprise not more than a weight percentage of 1 to 25 weight percent of polyvinyl chloride and/or polyethylene terephthalate.

The waste plastic-containing feed may comprise at least a percentage between 30 and 99 weight percent of one or more different kinds of waste plastic. The waste plastic-containing feed may also comprise one or more kinds of plasticized plastics.

As depicted in FIG. 2, the solid waste plastic feed from the plastic source 112 can be supplied to a feedstock pretreatment unit 114. While in the feedstock pretreatment unit 114, the introduced waste plastics may undergo a number of pretreatments to facilitate the subsequent pyrolysis reaction. Such pretreatments may include, for example, washing, mechanical agitation, flotation, size reduction or any combination thereof. The introduced plastic waste may be subjected to mechanical agitation or subjected to size reduction operations to reduce the particle size of the plastic waste. Such mechanical agitation can be supplied by any mixing, shearing, or grinding device known in the prior art which may reduce the average particle size of the introduced plastics by a value between 10 and 75 percent.

Next, the pretreated plastic feed may be introduced into a plastic feed system 116. The plastic feed system 116 may be configured to introduce the plastic feed into the pyrolysis reactor 118. The plastic feed system 116 may comprise any system known in the prior art that is capable of feeding the solid plastic feed into the pyrolysis reactor 118. The plastic feed system 116 may comprise a screw feeder, a hopper, a pneumatic conveyance system, a mechanic metal train or chain, or combinations thereof.

While in the pyrolysis reactor 118, at least a portion of the plastic feed may be subjected to a pyrolysis reaction that produces a pyrolysis effluent comprising a pyrolysis oil, e.g., r-PyOil, and a pyrolysis gas, e.g., r-Pyrolysis Gas. The pyrolysis reactor 118 may be an extruder, a tubular reactor, a tank, a stirred tank reactor, a riser reactor, a fixed bed reactor, a fluidized bed reactor, a rotary kiln, a vacuum reactor, a microwave reactor, an ultrasonic or supersonic reactor, or an autoclave, or a combination of these reactors.

More generally, pyrolysis is a process that involves the chemical and thermal decomposition of the introduced feed. Although all pyrolysis processes may be generally characterized by a reaction environment that is substantially free of oxygen, pyrolysis processes may be further defined, for example, by the pyrolysis reaction temperature within the reactor, the residence time in the pyrolysis reactor, the reactor type, the pressure within the pyrolysis reactor, and the presence or absence of pyrolysis catalysts. The pyrolysis reaction may involve heating and converting the plastic feed in an atmosphere that is substantially free of oxygen or in an atmosphere that contains less oxygen relative to ambient air. The atmosphere within the pyrolysis reactor 118 may comprise not more than 0.5 to 5 weight percent of oxygen gas. The pyrolysis process may be carried out in the presence of an inert gas, such as nitrogen, carbon dioxide, and/or steam. The pyrolysis process may also be carried out in the presence of a reducing gas, such as hydrogen and/or carbon monoxide.

Thereupon, the temperature in the pyrolysis reactor 118 may be adjusted to as to facilitate the production of certain end products. The pyrolysis temperature in the pyrolysis reactor 118 may be between 325°C or 1100°C, including certain smaller ranges like 350 to 900°C, 350 to 700°C, 350 to 550°C, 350 to 475°C. 500 to 1100°C, 600 to 1100°C, or 650 to 1000°C. However, the pyrolysis temperature in the pyrolysis reactor 118 should be not more than 1100°C.

Referring again to FIG. 2, the pyrolysis effluent 120 exiting the pyrolysis reactor 118 generally comprises pyrolysis gas, pyrolysis vapors, and residual solids. The conversion effluent 120 from the pyrolysis reactor 118 may be introduced into a solids separator 122. The solids separator 122 may be any conventional device capable of separating solids from gas and vapors such as a cyclone separator or a gas filter or combination thereof. The solids separator 122 removes a substantial portion of the solids from the conversion effluent 120. At least a portion of the solid particles 24 recovered in the solids separator 122 may be introduced into an optional regenerator 126 for regeneration, generally by combustion. After regeneration, at least a portion of the hot regenerated solids 128 may be introduced directly into the pyrolysis reactor 118. At least a portion of the solid particles 124 recovered in the solids separator 122 may be directly introduced back into the pyrolysis reactor 118, especially if the solid particles 124 contain a notable amount of unconverted plastic waste. Solids may be removed from the regenerator 126 through line 145 and discharged out of the system.

Turning back to FIG. 2, the remaining gas and vapor conversion products 130 from the solids separator 122 may be introduced into a fractionator 132. In the fractionator 132, at least a portion of the pyrolysis oil vapors may be separated from the pyrolysis gas to thereby form a pyrolysis gas product stream 134 and a pyrolysis oil vapor stream 136. Suitable systems to be used as the fractionator 132 may include, for example, a distillation column, a membrane separation unit, a quench tower, a condenser, or any other known separation unit known in the art. Any residual solids 146 accrued in the fractionator 132 may be introduced in the optional regenerator 126 for additional processing.

At least a portion of the pyrolysis oil vapor stream 136 may be introduced into a quench unit 138 in order to at least partially quench the pyrolysis vapors into their liquid form (i.e., the pyrolysis oil). The quench unit 138 may comprise any suitable quench system known in the art, such as a quench tower. The resulting liquid pyrolysis oil stream 140 may be removed from the system 110 and utilized in the other downstream applications described herein. The liquid pyrolysis oil stream 140 may not be subjected to any additional treatments, such as hydrotreatment and/or hydrogenation, prior to being utilized in any of the downstream applications described herein.

At least a portion of the pyrolysis oil vapor stream 136 may also be introduced into a hydroprocessing unit 142 for further refinement. The hydroprocessing unit 142 may comprise a hydrocracker, a catalytic cracker operating with a hydrogen feed stream, a hydrotreatment unit, and/or a hydrogenation unit. While in the hydroprocessing unit 142, the pyrolysis oil vapor stream 136 may be treated with hydrogen and/or other reducing gases to further saturate the hydrocarbons in the pyrolysis oil and remove undesirable byproducts from the pyrolysis oil. The resulting hydroprocessed pyrolysis oil vapor stream 144 may be removed and introduced into the quench unit 138.

Alternatively, the pyrolysis oil vapor may be cooled, liquified, and then treated with hydrogen and/or other reducing gases to further saturate the hydrocarbons in the pyrolysis oil. In this case, the hydrogenation or hydrotreating is performed in a liquid phase pyrolysis oil. No quench step is required in this embodiment post-hydrogenation or post-hydrotreating.

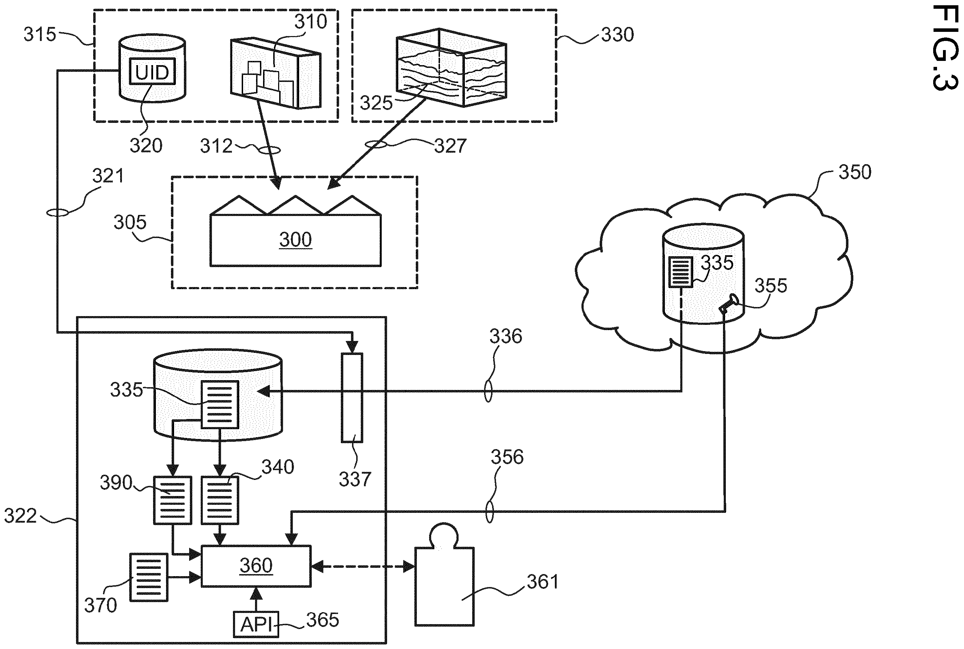

FIG. 3 depicts an embodiment of the herein disclosed method for producing a chemical product, by way of a combined block/flow diagram. The schematically shown production facility 300 for the production may be located at a target location 305. Waste material 310, or waste-derived material respectively, to be used for the production may be imported 312 from a first source location 315. The waste material 310 is imported together with a corresponding unique identifier 320 that is transferred 321 to a processing or control device 322 which controls a production process at the production facility 300. In addition, a raw or input material 325 to be used also for the production may be imported 327 from a second source location 330.

For the imported 312 waste material 310, an underlying waste material-related data object or data asset 335 being stored in a cloud 350 is transferred 336 to the processing/control device 322, based on the above-described approach, wherein an included material attribute 340 is also accessed by the processing/control device 322.

In the area of chemical recycling, such material attributes 340 for classifying a waste-derived material into at least one waste material category can be divided into or assigned to the following three exemplary material or substance categories A) - C), which correspond with the above-mentioned environmental impact factors:
A) Preferred materials for chemical recycling, i.e. materials with a positive environmental impact:
   Solid hydrocarbon rich materials, such as polymers, e.g. Polyethylene (HPDE, LDPE), Polypropylene (PP) and Polystyrene (EPS), Polyisoprene, Polyisobutylene, Polybutadiene.
B) Less-preferred materials for chemical recycling, i.e. materials with a moderate environmental impact:
   Polyvinvylchlorid (PVC), Polyester (PES), Polyamide (PA), e.g. Nylon, Nylon6 and Nylon 6,6, Polyurethan (PU), Epoxy Resins, Polyethylene Terephthalate (PET), Polymethacrylate (PMMA), Polylactic Acid (PLA), Polyacrylonitrile (PAN), and materials containing hydrocarbons derived from wood, agricultural products and algae.
C) Non-preferred materials for chemical recycling, i.e. materials with no or even a negative environmental impact:
   Teflon (PTFE), Silicone, Glass, Pigments, Metal(s) and metal(s) content containing materials as for example (Pb, Hg, As, Zn, Si, Na, K, Mg, Ni, Cu, ....), and the like.

In the present embodiment, based on the unique identifier 320, an underlying access authorization procedure 345 is conducted that is based on an underlying access token 355 which, in the present embodiment, is also stored in the cloud 350 and transferred 356 to the processing/control device 322. The access token 355, in the underlying token-based authentication procedure, is used as known in the prior art, to allow an application 360 used by a user 361 to access an API 365 to get access to the contents of the waste material-related data object 335, namely an attested material attribute 340. The application 360 hereby receives the access token 355 only after the user did successfully authenticate him- or herself and thus is authorized for the access, and then passes the access token 355 when it calls the API 365. In view of the availability of the access token 355 in the cloud 350, the access token can be easily obtained at any target location of the underlying production facility 300.

Based on the contents of the accessed attested material attribute 340 of the waste material 310, any waste-related technical requirements included in the attested material attribute 340 are compared by the application 360 with corresponding technical requirements 370 being valid at the target location 305 of the production facility 300, namely those technical requirements relating to a same waste material category (see beforehand).

Such waste-related technical requirements are defined e.g. in the European "Waste Framework Directive" that sets the basic concepts and definitions related to waste processing, including definitions of waste, recycling and recovery of waste. This EU Directive explains when waste ceases to be waste and becomes a secondary raw material, and how to distinguish between waste and by-products. The Directive also introduces the "polluter pays principle" and the "extended producer responsibility". The EU waste processing approach comprises a five-step "waste hierarchy", established in a "Waste Framework Directive". The five steps comprise the following categories for waste material processing: "prevention", "re-use", recycling, recovery and disposal.

As another example, such technology-related EU regulations prohibit the mixing of municipal waste or hazardous waste with inert waste. Further, there is an ongoing trend to recycle natural polymers from biomass wastes, e.g. through extraction of cellulose, lignin, collagen, gelatin, keratin, and chitin/chitosan from biomass wastes. In addition, any plastic can be recycled though, but when two plastic types are mixed, one may contaminate the other thus reducing the value of the waste material or requiring resources to separate them before further processing. It comes in addition that not all materials like plastic can be recycled multiple times due to technical degradation effects.

The herein disclosed digital representation of the waste-related technical requirements can be implemented as a rule-based model or set of rules, for instance based on the above-described material attributes 340 for classifying waste-derived materials into waste material categories. Hereby, the above described three exemplary material or substance categories A) - C) can be used. A set of rules may be related to the possible combinations of above described "preferred materials", namely combinations with other "preferred materials" or with "less-preferred materials", maybe including limitations like those described referring to FIG. 5. Such limitations may relate to suitability of mentioned gaseous and/or non-gaseous substances being produced during pyrolysis for the subsequent cracking process.

The digital implementation of such rules, in the present example, may take the form of {IF 'condition' THEN 'result'}, for instance {IF 'pyrolysis process results into a first gaseous and a non-gaseous substance for a first input material' AND IF 'pyrolysis process results into a second gaseous substance' THEN 'using as input to the cracking process only the two gaseous substances}).

In contrast to a described individual rule, which is not a model, a rule-based machine learning system may comprise a larger set of such rules, or an according knowledge base, that may even comprise a prediction model. The larger set of rules, or the knowledge base, may include more concrete chemical information about the suitability of different chemical substances for their recycling efficiency, i.e. the amount of recyclable substances produced during the pyrolysis process.

An according rule-based machine learning allows to encompass machine learning methods which identify, learn, or evolve 'rules' to store, manipulate or apply underlying information or data. A corresponding rule-based machine learner identifies and utilizes a set of relational rules that collectively represent an underlying knowledge captured by the ML system, in contrast to machine learners which identify only a singular model that can be universally applied to any instance in order to make a prediction. Such a rule-based machine learning approach also includes a learning classifier and a process that relies on a set of rules, each covering contextual knowledge.

In case that the compared technical requirements are identical or similar, the production process is conducted without any restrictions or limitations regarding the used waste material 310. However, in the other case that the compared technical requirements are at least considerably different, a (waste) material property according to an associated material attribute 390 of the waste material 310, which is also included in the waste material-related data object 335 and thus can also be obtained from the cloud 350, is adapted in order to satisfy the requirement(s) of the underlying local technical requirements 370, for instance utilizing a (re-)mixing approach as illustrated in FIG. 5.

It has to be noted that the waste material-related data object 335 can only be gathered or downloaded 337 from the cloud 350 by use of the unique identifier 320 which is gathered when importing 312 the waste material 310 from the first source location 315.

Based on a mentioned balance space of underlying waste-related technical requirements, it is determined how components of waste materials or products can be handled or mixed with each other, wherein it is distinguished between mentioned attested sustainability properties and mentioned associated properties of a material or product, according to the corresponding associate or attested material attributes.

The described method allows to automatically manage described border transition events, based on the distinction into attested and associated sustainability properties and based on mentioned applicable environmental or technical/technological requirements. Hereby associated sustainability properties of waste materials or products may be their inherent CO2 emissions or corresponding footprints generated during production and use of the underlying products.

According to the herein disclosed method, it is determined which "attested" material properties are relevant for the underlying waste processing, particularly how such attested material properties can be assigned across an underlying regulatory boundary. On the other hand, the associated material properties may be adapted to meet the underlying technical requirements.

The described method can be event-driven insofar as if any waste material or product crosses a mentioned border, an automized process for processing underlying waste- material properties is triggered by an according event-based trigger. This process determines or evaluates how changed technical requirements for waste processing can be met, namely based on data about local or regional/national technical requirements for such waste processing. These data may also include geographic information about the relevant borders and may provide checkpoints for different regions and corresponding environmental impact factors.

In case of a detected cross-border transportation or shipment event of an underlying waste material/product, an evaluation process is triggered which investigates whether the cross-border event involves any changed technical requirements for the underlying waste material/product. If this is the case, these results of the investigation are documented utilizing a described waste material-related data object that includes a mentioned unique identifier.

Authorization to access the stored waste material-related data object is based on an access authorization procedure that is associated with the unique identifier and the underlying chemical product data of the waste material/product. The procedure includes instructions for reverse data tracking of the chemical material/product that was underlying to produce the present waste material/product and for generating corresponding tracking data. The procedure, in the present embodiment, also includes data transaction/usage policies and other instructions associated with data provision/consuming services. Insofar, the mentioned event-based trigger is specified by the access authorization procedure. The authorization procedure particularly includes the mentioned instructions based on the event-based trigger which triggers or initializes instructions to generate the mentioned (reverse) tracking data from the mentioned material/product data. However, the authorization procedure may also specify the tracking data which are derived from the mentioned product data associated with the waste material/product.

The described decentral transfer of the data related to the underlying chemical product data of the waste material or product is based on a decentral network which includes participant nodes configured to perform such data transactions. The participant nodes are associated with producers of the underlying materials/products. The data transactions are based on a transaction protocol that includes an authentication/authorization mechanism. Based on the authentication/authorization mechanism, a peer-to-peer network between the participant nodes of the decentral network is established. The authentication mechanism is associated with the mentioned unique identifier and thus is accessible by a mentioned data providing/consuming service.

The unique identifier, in the present embodiment, is uniquely associated with a physical entity of the waste material/product, namely how it is packaged for the cross-border transportation or shipment. The underlying data, in the present embodiment, are related to a digital representation of the herein disclosed technical requirements, namely pointing to underlying real material/product data, or parts thereof. The digital representation comprises an interface to a data providing service and an interface to a data consuming service. The digital representation pointing to the material/product data is uniquely associated with the unique identifier.

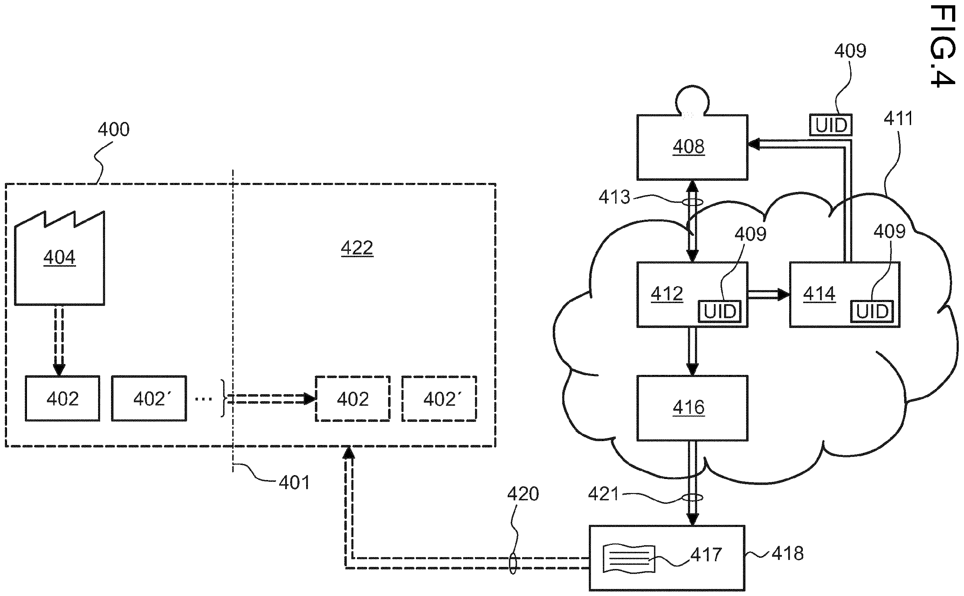

Referring to FIG. 4, it is illustrated how a herein described waste material-related data object can be implemented in connection with an underlying waste-derived material/product within a mentioned distributed and cross-border arranged or located chemical production network 400.

It is hereby assumed that the chemical production network 400 produces a chemical product in a production facility 404 wherein, during the production process, several waste materials 402, 402' etc. are generated. It is further assumed that the generated waste materials 402, 402' are transported or shipped 403 within the chemical production network 400 and meanwhile enter a relevant boundary 401 of the chemical production network 400 between two regions with different technical requirements regarding the possible processing of waste-derived material.

Upon production of the chemical product in the production facility 404, for the generated waste or waste-derived materials 402, 402', a waste material-related data object 417 is generated. For that purpose, an apparatus 410 is configured to generate the waste material-related data object 417.

A requestor 408 requests to acquire one or more of the waste materials 402, 402', who needs to get access to the contents of the waste material-related data object 417 for the above-mentioned purpose, is required to first obtain an according unique identifier 409 being stored in the present example de-centrally in a cloud computing environment ("cloud") 411. For this process step or task, the requestor 408 is also configured to generate an according request 413 for the unique identifier 409. Such a request 413 may be automatically generated or triggered by a labelling system, such as a QR Code generator. The request 413 to provide the unique identifier 409 is provided to an identifier generator 412 that is configured to generate the unique identifier 409 de-centrally. The identifier generator 412, in the present example, then provides the generated the unique identifier 409 to an identifier provider 414.

The identifier provider 414 then provides 415 the unique identifier 409 to the requestor 408, in order to associate the unique identifier 409 with the requested waste materials 402, 402'. This association may include the encoding of the unique identifier into a QR code and providing the QR code for labelling the waste materials 402, 402'. This way, a physical identifier 417 is provided too that relates to the underlying (real) physical entities 402, 402' of the waste materials, based on the unique identifier 409.

The identifier generator 412 also provides the unique identifier 409 to a passport generator 416 that is configured to generate a waste material-related data object 417 for the waste materials 402, 402'. The generated waste material-related data object 417 includes a beforehand described unique identifier 409 and underlying data concerning e.g. the origin and history and chemical properties of the waste-derived materials 402, 402'. Those data further include a digital representation pointing to the underlying waste materials data or parts thereof. The waste material-related data object 417 further includes, or is related to, an authentication mechanism that is associated with the unique identifier 409 and the mentioned chemical data of the waste-derived materials 402, 402'.

In the present example, the waste material-related data object 417 is provided 421 to a corresponding waste material-related data object provider 418. The waste material-related data object provider 418 is configured to provide 420 the waste material-related data object 417 and the chemical waste-related data associated with the waste material-related data object 417 to the chemical production network 400, in the present example from the left side with the production facility 404 (i.e. source region) to the right side (i.e. target region) 422 between the technical regulatory relevant boundary 401 of the chemical production network where the waste materials 402, 402' have been transported or shipped.

Referring now to FIG. 5, another aspect of the present disclosure is illustrated by way of a schematic drawing of a chemical production process that uses both recyclable and bio-based input waste-derived materials for production of a chemical product. The recyclable input material may be a hydrocarbon rich plastic material such as Polyethylene (HPDE or LDPE), wherein the bio-based input material may be an agricultural product, like a material containing hydrocarbons derived from wood.

An above described "attested" material attribute and corresponding material property with an environmental impact which cannot be changed or adapted during the production process, in the present scenario, is the bio-based input waste-derived material, as being a less-preferred material for chemical recycling. According to herein assumed underlying technical requirements for the production at the target location of the underlying production facility, it might not be permitted to use more than one recyclable waste-derived materials when used in combination with a bio-based waste-derived material. Since these attested requirements cannot be changed during the production process, these technical requirements are considered using a waste material (re)mixing approach, as realized by a virtual mixer station 500 in the embodiment depicted in FIG. 5.

The shown overall production process starts with a first sub-process 505, e.g. a pyrolysis process, which produces two intermediate products 515 from the recyclable input materials, together with two different recycled waste-derived materials 525, namely two different fractions of the input plastic material, for instance pyrolysis oil_ and a pyrolysis gas mixture. In addition, a second sub-process 510 produces, based on the bio-based input material, one intermediate product 520 and one recycled waste-derived material 530 being derived from the bio-based waste (wood) material, for instance a combustible gas. The pyrolysis of wood is mainly about "degassing" the wood and the resulting gas escapes from the wood during the combustion process. The gasification of wood involves a reaction of pyrolysis gas with oxygen, which leads to the mentioned combustible gas.

The resulting waste-derived materials 525, 530 are stored on the one hand in a first storage capacity 535 for the recycled waste-derived materials 541, 542 and on the other hand in a second storage capacity 540 for the renewable waste-derived material 543.

All three waste-derived materials 541, 542, 543 are then fed 545 into the mixer station 500 which automatically mixes only one recycled waste-derived material 542 of the stored two recycled waste-derived materials 541, 542, namely only the pyrolysis gas mixture, together with the combustible gas 543. One reason for this selection is that the following cracking process 550 can be controlled or processed much better or much more efficient with two gaseous input materials, rather than a liquid input (i.e. pyrolysis oil) together with a gaseous input (i.e. combustible gas).

Referring to FIG. 1, the portion of recycled waste-derived materials 541, 542 relates to the predescribed values "recycle content value" and "r-value" which relate to the real quantity of waste-derived material having its origin in recycled waste. Through this mixing the above mentioned underlying technical requirements can be met or satisfied.

Referring again to FIG. 1, during the pyrolysis step of the underlying production process, the further values "pyrolysis recycle content value" and "pr-value" relate to the real quantity of material having its origin in the pyrolysis of recycled waste. The pr-value insofar is a subset of the mentioned "r-value" that is tied to the pyrolysis of recycled waste. The r-value or pr-value can be calculated by mass or percentage wherein a recycle content value may be deducted from a real recycle content inventory and may be applied to a product or composition to attribute recycle content to the product or composition.

## Claims

1. Computer-implemented method for controlling production of a product in a production facility using one or more input materials, in particular for the production of a chemical product, wherein at least one of the input materials is a waste-derived material which may be provided from a source location to a target location of the production facility and wherein the source location and the target location may comprise two different waste-related technical requirements for the use of waste-derived materials for the production of a product, the method comprising the following steps in an arbitrary order:
- providing a digital representation of the waste-related technical requirements for different source locations and target locations, wherein the digital representation includes the waste-related technical requirements as a rule-based model or set of rules, based on waste material categories being processed using material attributes for classifying a waste-derived material into at least one waste material category, and wherein it is distinguished between attested material attributes and associated material attributes;
- evaluating at least one rule of the set of rules or the rule-based model relating to at least one waste material category for an underlying source location and for the target location, in particular regarding an attested material attribute for the waste-derived material;
- generating control data for the production of the product, dependent on the result of the evaluation, wherein considering an associated material attribute.

2. Method according to claim 1, wherein an attested material attribute relates to a material property that cannot be changed during the production of the product and wherein an associated material attribute relates to a material property that can be changed during the production of the product.

3. Method according to claim 1 or 2, wherein the attested and the associated material properties are properties related to the environmental impact of an underlying waste-derived material.

4. Method according to any of the preceding claims, wherein detecting a transport of the at least one waste-derived material from a source location to the target location, wherein at least one waste-related technical requirement is different or deviating between the source location and the target location regarding at least one waste material category and wherein, based on the result of the detection, an evaluation is initiated or triggered on whether the at least one attested material attribute is compliant or non-compliant with the different waste-related technical requirement.

5. Method according to claim 4, wherein further triggering an evaluation on whether the at least one associated material attribute can be amended in order to be compliant with the different waste-related technical requirement.

6. Method according to any of the preceding claims, wherein the digital representation of the waste-related technical requirements for different source locations and the target location is realized as a machine learning system with the rule-based model implemented as a logical machine learning model.

7. Method according to any of the preceding claims, wherein a waste-derived material is assigned to at least one of the following waste material categories: "recyclable"/"recycled", "reusable"/"reused", "renewable"/"renewed", "recoverable"/"recovered, "disposable"/"disposed", "biomass-based", "virgin feedstock", "bio-based", "fossil feedstock" or "renewable energy-based".

8. Method according to any of the preceding claims, wherein the control data generated for a waste-derived material with an associated material attribute relating to a different waste-related technical requirement are adapted to meet the different waste-related technical requirement.

9. Method according to claim 8, wherein the waste-derived material is mixed or remixed with another input material or waste-derived material for production of the product.

10. Method according to any of claims 4 to 9, wherein the detection of a different or deviating waste-related technical requirement is based on data being stored in a decentral network, wherein the stored data include local and/or regional/national waste-related technical requirements for the use of waste-derived materials for production of a product.

11. Method according to claim 10, wherein the de-centrally stored data include geographic information about national borders and the underlying national waste-related technical requirements.

12. Method according to any of the preceding claims, wherein attested material attributes and/or associated material attributes of a waste-derived material are documented in a waste material-related data object.

13. Method according to claim 12, wherein authorization to access the data object is controlled by at least one authorization rule being associated with a unique identifier.

14. Method according to claim 13, wherein the at least one authorization rule is configured for reverse data tracking of the waste-derived material used for production of a product.

15. Computer-implemented system for controlling production of a product in a production facility according to any of the preceding method claims, using one or more input materials, in particular for the production of a chemical product, wherein at least one of the input materials is a waste-derived material which may be provided from a source location to a target location of the production facility and wherein the source location and the target location may comprise two different waste-related technical requirements for the use of waste-derived materials for the production of a product, the system comprising:
- a processing device for conducting the evaluation according to any of the preceding claims of the at least one rule or the rule-based model, based on a digital representation of the waste-related technical requirements for different source locations and the target location and based on the waste material categories using material attributes for classifying a waste-derived material into at least one waste material category, wherein distinguishing between attested material attributes and associated material attributes;
- a control device for controlling the production of the product, dependent on the result of the evaluation, wherein considering an associated material attribute.

16. System according to claim 15, wherein the processing device detects a transport of the at least one waste-derived material from a source region to the target location, wherein at least one waste-related technical requirement is different or deviating between the source location and the target location regarding at least one waste material category and wherein, based on the result of the detection, an evaluation is initiated or triggered on whether the at least one attested material attribute is compliant or non-compliant with the different waste-related technical requirement.

17. System according to claim 15 or 16, wherein the processing device further triggers an evaluation on whether the at least one associated material attribute can be amended in order to be compliant with the different waste-related technical requirement.

18. System according to any of claims 15 to 17, comprising a virtual mixer for mixing or remixing the waste-derived material with another input material or waste-derived material for the production of the product, based on the result of the detection of a transport with at least one waste-related technical requirement differing or deviating between the source location and the target location.

19. System according to any of claims 15 to 18, wherein the processing device detects a different or deviating waste-related technical requirement, based on data being stored in a decentral network, wherein the stored data include local and/or regional/national waste-related technical requirements for the use of waste-derived materials for production of a product.

20. System according to any of claims 15 to 19, wherein attested material attributes and/or associated material attributes of a waste-derived material are documented in a waste material-related data object.

21. Digital waste material-related data object for documenting attested material attributes and/or associated material attributes of a waste-derived material.
